Europäisches Patentamt

European Patent Office  (11) Publication number: **0 026 800**

Office européen des brevets  **B1**

(12)  **EUROPEAN PATENT SPECIFICATION**

(45) Date of publication of patent specification: 30.05.84  (51) Int. Cl.³: **B 62 K 15/00**

(21) Application number: **79302096.7**

(22) Date of filing: **03.10.79**

(54) Folding bicycle.

<table>
<tr><td>(43) Date of publication of application:<br>15.04.81 Bulletin 81/15</td><td>(73) Proprietor: BROMPTON BICYCLE LIMITED<br>The Old Power House Kew Garden Station<br>Richmond, Surrey, England (GB)</td></tr>
<tr><td>(45) Publication of the grant of the patent:<br>30.05.84 Bulletin 84/22</td><td>(72) Inventor: Ritchie, Andrew William<br>53, Egerton Gardens<br>London, S.W.3 (GB)</td></tr>
<tr><td>(84) Designated Contracting States:<br>DE FR IT NL</td><td>(74) Representative: Warren, Anthony Robert et al<br>BARON & WARREN 18 South End Kensington<br>London W8 5BU (GB)</td></tr>
<tr><td>(56) References cited:<br>BE-A- 464 801<br>BE-A- 628 783<br>US-A-3 710 883<br>US-A-3 993 322</td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention concerns folding bicycles.

Folding bicycles are already well known. For example, Belgian Patent Specification No. 628,783 (Raimondi) describes a folding bicycle comprising a main frame, steerable front wheel assembly connected to the main frame, a rear wheel assembly including a rear wheel, first pivot means interconnecting the rear wheel assembly and the main frame such that the rear wheel assembly can pivot relative to the main frame substantially in the plane of the rear wheel into a folded position in which the axle of the rear wheel is located beneath the main frame and the rear wheel lies substantially between the positions occupied by the front and rear wheels when the bicycle in unfolded, and a pedal mechanism. In Raimondi's folding bicycle, the first pivot means is coaxial with, and the rear wheel assembly is pivotable about, the axis of the pedal mechanism. In the folded condition it is not sufficiently compact for easy transport, nor is the bicycle stable.

U.S. Patent Specification No. 3,993,322 (Van Tijen) shows a more compact form of folded bicycle than Raimondi but requires a substantially more complex series of hinge arrangements between the main frame and the front and rear wheel assemblies.

The present invention has as an object to alleviate the disadvantages of the above known folding bicycles. To this end, it consists in a folding bicycle of the type described by Raimondi, characterised in that the main frame comprises second pivot means whereby the front wheel assembly is foldable into a position in which the front wheel lies substantially alongside the rear wheel when the rear wheel assembly is in its folded position, and in that the pedal mechanism is mounted on the main frame with its axis of rotation so located with respect to the axis of the first pivot means that in the folded condition the distance between the axes of the rear wheel and the pedal mechanism is less than in the unfolded condition.

In this specification and the following claims all references to directions of movement of various parts of the bicycle or to directions of axes are given in relation to a bicycle in its unfolded or operative condition.

In order that the present invention may be more readily understood an embodiment thereof will now be described by way of example and with reference to the accompanying drawings, in which:

Figure 1 is a side elevation of a bicycle constructed in accordance with the present invention,

Figure 2 is a similar view showing the bicycle folded,

Figure 3 is a diagrammatic end view of the front of the bicycle of Figure 2 showing how the handlebars of the bicycle fold, and

Figures 4a, b and c are diagrammatic views showing various stages in the folding of the bicycle.

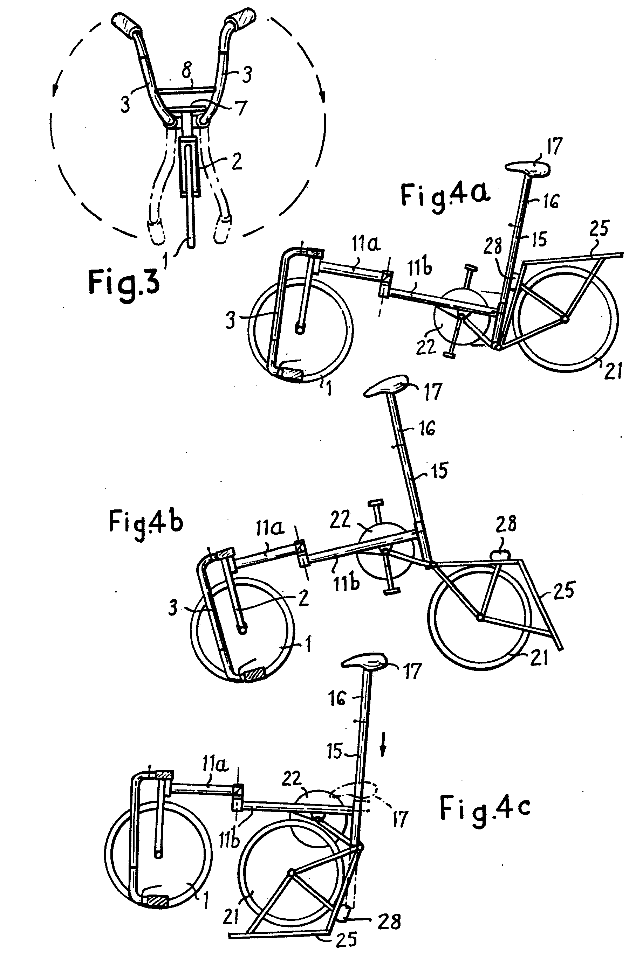

The folding bicycle shown in the accompanying drawings has a front wheel assembly comprising a front wheel 1 mounted on a fork 2 above which is mounted a pair of handlebars 3 each of which can be folded downwardly to lie alongside the wheel 1. Each handlebar 3 can pivot relative to the fork and front wheel. In the unfolded position a stop 7 mounted on the fork and located between the pivots of the handlebars 3 prevents them from moving towards one another beyond the position shown in Figure 3 and the handlebars are held in this position by a link 8.

The front wheel assembly including the handlebars 3 and wheel 1 pivot about a conventionally inclined steering pivot 10 carried in the front part 11a of a main frame member 11, the front part 11a being pivoted to the rear part 11b of the main frame at second pivot 12. The pivot comprises a tubular portion on the front part 11a received within a cylindrical portion on the rear part 11b so as to be capable of rotation therein. The second pivot 12 is provided with a releasable clamping mechanism 13 which frictionally clamps the two parts against relative pivoting, the clamping mechanism 13 enabling the parts to be clamped relative to one another in both the erected and the folded condition of the bicycle. The rear end of the part 11b carries a tubular seat support member 14 in which is received a tubular seat strut 15 which in turn receives a seat post 16 carrying a saddle 17. The height of the seat can be adjusted by sliding the post 16 in the strut 15 and then clamping it with a clamp 18. The saddle support strut 15 is also slidable relative to the saddle support member 14 and can be clamped relative to the latter by a clamp 19. At its lower end the saddle support member 14 carries a horizontal first pivot 20 about which a rear wheel frame in which the rear wheel 21 is mounted can pivot during folding and unfolding of the bicycle. It will be appreciated that the first pivot 20 is located behind the axis about which the chain wheel 22 of the bicycle rotates; the importance of this will become apparent when the operation of folding the bicycle is explained hereinafter. The chain wheel 22 is provided as usual with pedals 23.

The rear wheel assembly comprises a pair of tubular struts 24 connected at their upper and lower ends by cross bars to form a rectangular frame. The upper end of this frame is connected to a luggage carrier 25 at the lower end to a pair of tubular struts 26 extending on either side of the rear wheel 21 to carry the hub 27 of the rear wheel. Additionally bracer struts 28' extend on either side of the wheel 21 from the hub to the struts 24 and the luggage carrier 25 respectively. The struts also carry a resilient shock pad 28 which when the bicycle is in its erected condition bears against the seat support strut 15. It will be appreciated that the first pivot 20 is the only point of connection between the rear wheel frame and the remainder of the bicycle. Thus if the bicycle is lifted vertically off the ground the whole rear wheel frame will pivot downwardly about the first pivot 20. In use the combined effect of the weight of the bicycle and a rider will mean that the bicycle will behave as if the rear wheel assembly were rigidly mounted as in a conventional bicycle save that the resilient pad 28 will act as a shock absorber.

The bicycle is provided with a spring-biased arrangement which keeps the chain under tension when the bicycle is folded.

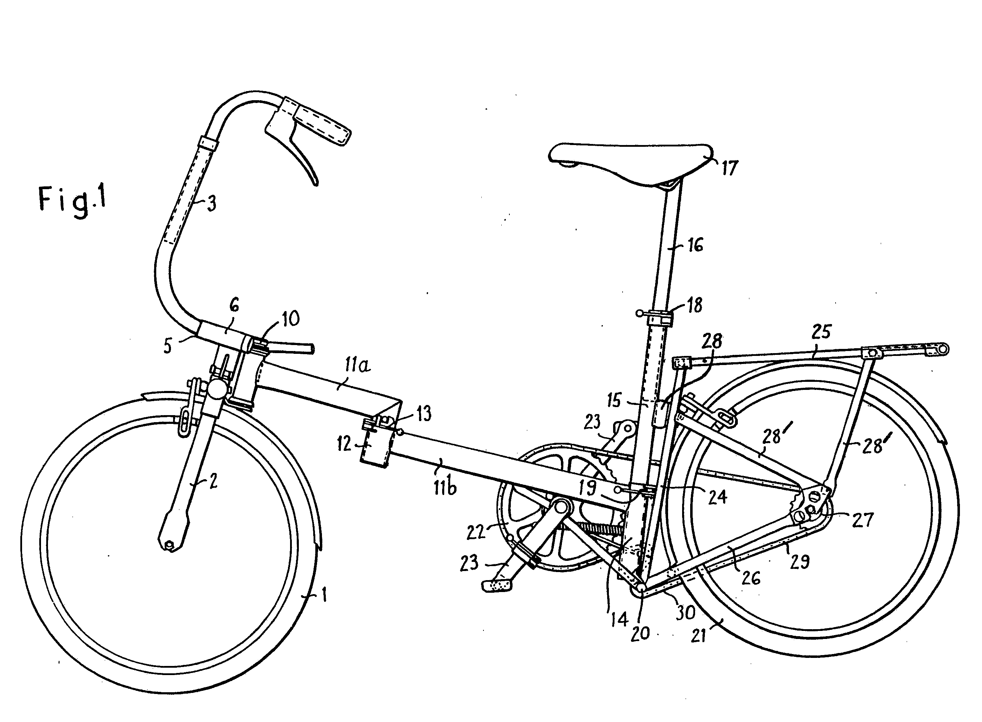

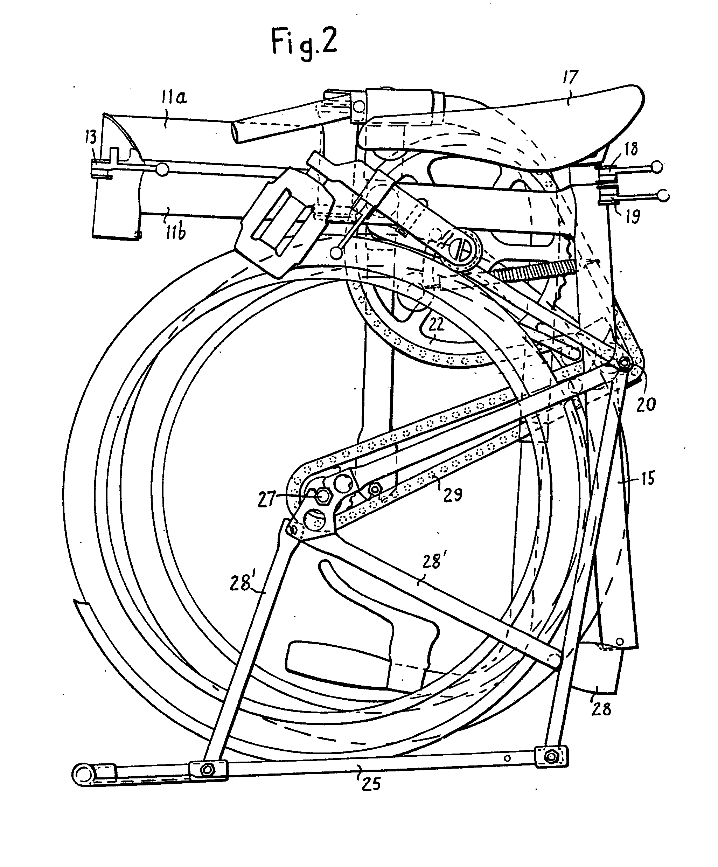

The folding operation of the bicycle from the erected configuration of Figure 1 to the folded configuration of Figure 2 will now be described.

Firstly the link 8 is disconnected. This enables the handlebars to be folded downwardly as shown in Figure 3 and Figure 4a. By lifting the bicycle by the sear 17 or seat support strut 15 or other convenient hold on the central frame, the rear wheel frame rotates clockwise about the pivot 20. This is shown in Fig. 4b. Thus the hub of the rear wheel moves from a position behind the strut 15 to a position in front of the strut 15 until the rear of the luggage carrier 25 touches the ground and, by pushing the bicycle backwards, this rotation is continued until the rear wheel 21 comes into contact with the base part 11b of the main frame. This is the position shown in Figure 4c.

At this stage the whole machine is supported on the now inverted luggage carrier 25.

The clamp 13 is now released and the forward part 11a of the main frame together with the front wheel assembly with the now folded handlebars, is drawn round so that it rotates clockwise (as seen from above) about the pivot 12. This rotation is continued until the front wheel lies alongside the rear wheel. The clamp 13 is then done up again, so securing the two parts 11a, 11b, in the folded configuration. The right hand pedal is now pushed backwards and down until it lies adjacent the front wheel and folded handlebars. If the left hand pedal is foldable, it may now be folded. The clamps 18 and 19 holding the saddle are now released and the saddle is pushed down, until the clamp 18 butts against the clamp 19 and the lower end of strut 15 engages the shock pad 28 and so stops rotation of the rear frame. The bicycle may now be carried, possibly by a suitably placed carrying handle (not shown), the rear frame being prevented from rotating downwardly by virtue of the strut 15 bearing on the rubber shock pad 28.

It will be appreciated that the above description has been solely concerned with a pedal bicycle. However, the manner in which the handlebars, main frame and rear frame fold, together with the associated clamps are or course equally applicable to a bicycle propelled by other means. Such a bicycle might have an electric or internal combustion engine driving either the front or rear wheel.

**Claims**

1. A folding bicycle comprising a main frame (11), a steerable front wheel assembly (1, 2, 3) connected to the main frame, a rear wheel assembly including a rear wheel (21), first pivot means (20) interconnecting the rear wheel assembly and the main frame (11) such that the rear wheel assembly can pivot relative to the main frame substantially in the plane of the rear wheel into a folded position in which the axle of the rear wheel is located beneath the main frame and the rear wheel lies substantially between the positions occupied by the front and rear wheels (1, 21) when the bicycle is unfolded, and a pedal mechanism (22, 23), characterised in that the main frame (11) comprises second pivot means (12) whereby the front wheel assembly (1, 2, 3) is foldable into a position in which the front wheel (1) lies substantially alongside the rear wheel (21) when the rear wheel assembly is in its folded position, and in that the pedal mechanism (22, 23) is mounted on the main frame (11) with its axis of rotation so located with respect to the axis of the first pivot means (20) that in the folded condition the distance between the axes of the rear wheel and the pedal mechanism is less than in the unfolded condition.

2. A folding bicycle as claimed in claim 1, characterised by a strut (15) carried by and slidable relatively to the main frame (11) between a raised position and a lowered position and supporting a saddle (17), said strut, when in its lowered position and when said rear wheel assembly is in its folded position, lying in the path of said rear assembly to prevent the latter from unfolding.

3. A folding bicycle as claimed in claim 1, characterised by a support member (25) carried by the rear wheel assembly, said first pivot means (20) being so located that when the bicycle is in its folded condition said support member (25) acts as a base to support the folded bicycle, and when said bicycle is in its unfolded condition, said support member is substantially horizontal.

**Patentansprüche**

1. Faltbares Fahrrad, bestehend aus einem Hauptrahmen (11), einer lenkbaren Vorderradbaugruppe (1, 2, 3), die mit dem Hauptrahem verbunden ist und einer Hinterradbaugruppe mit einem Hinterrad (21), aus einer ersten Drehachse (20), die die Hinterradbaugruppe gegenüber dem Hauptrahmen im wesentlichen in der Ebene des Hinterrades in eine gefaltete Lage schwenken kann, in der die Achse des Hinterrades unterhalb des Hauptrahmens liegt und das Hinterrad im wesentlichen zwischen den Stellungen liegt, die von dem Vorder- und Hinterrad (1, 21) eingenommen werden, wenn das Fahrrad nicht gefaltet ist, und aus einem Pedalmechanismus (22, 23), dadurch gekennzeichnet, daß der Hauptrahmen (11) eine zweite Drehachse (12) aufweist, wodurch die Vorderradbaugruppe (1, 2, 3) in eine Stellung faltbar ist, in der das Vorderrad (1) im wesentlichen seitlich neben dem Hinterrad (21) liegt, wenn sich die Hinterradbaugruppe in der Faltstellung befindet, und daß der Pedalmechanismus (22, 23) im Hauptrahmen (11) gelagert ist und mit seiner Drehachse gegenüber der Achse der ersten drehachse (20) so gestellt ist, daß im gefalteten Zustand der Abstand zwischen der Achse des Hinterrades und dem Pedalmechanismus geringer ist als in ungefalteten Zustand.

2. Faltbares Fahrrad nach Anspruch 1, dadurch gekennzeichnet, daß eine den Sattel (17) tragende Strebe (15) vom Hauptrahmen (11) abgestutzt and gegenüber dem Hauptrahmen zwischen einer angehobenen und einer abgesenkten Stellung verschiebbar ist, wobei die Strebe in ihrer abgesenkten Stellung und bei gefalteter Hinterradbaugruppe in der Verschwenkungsbahn der Hinterradbaugruppe liegt, um die letztere gegen Auseinanderfalten zu sperren.

3. Faltbares Fahrrad nach Anspruch 1, gekennzeichnet durch einen Träger (25) (Gepäckträger) der Hinterradbaugruppe, deren Drehachse (20) so liegt, daß im gefalteten Zustand des Fahrrades de Träger (25) die Abstützbasis des gefalteten Fahrrades bildet und bei ungefaltetem Zustand des Fahrrades im wessentlichen oberhalb des Hinterrades horizontal liegt.

**Revendications**

1. Bicyclette pliante comprenant un cadre principal (11), un ensemble de roue avant orientable (1, 2, 3) relié au cadre principal, un ensemble de roue arrière (21), une première articulation (20) reliant l'ensemble de roue arrière au cadre principal (11) de sorte que l'ensemble de roue arrière peut être pivoté par rapport au cadre pincipal sensiblement dans le plan de la roue arrière dans une position reliée dans laquelle l'axe de la roue arrière se trouve au-dessous du cadre principal et la roue arrière s'étend sensiblement entre les positions occupées, lorsque la bicyclette est dépliée, par les roues avant et arrière (1, 21) et un mécanisme d'entraînement à pédales caractérisée en ce que le cadre principal (11) comporte une deuxième articulation (12) permettant de faire pivoter l'ensemble de roue avant (1, 2, 3) dans une position dans laquelle la roue avant (1) s'étend sensiblement le long de la roue arrière (21) lorsque l'ensemble de roue arrière est repliée, le mécanisme à pédales (22, 23) étant monté sur le cadre principal (11) avec son axe de rotation positionné par rapport à l'axe de la première charnière (20) de sorte que la distance entre les axes de la roue arrière et du mécanisme de pédales est plus petite en position reliée qu'en position dépliée.

2. Bicyclette pliante suivant la revendication 1, caractérisée en ce qu'elle comporte un tube (15) monté coulissant sur le cadre principal (11) entre une position inférieure et une position supérieure et qui supporte un selle (17), ledit tube (15) s'étendant dans sa position inférieure lorsque l'ensemble de roue arrière s'étend dans sa position repliée dans le passage de l'ensemble de roue arrière pour éviter le dépliage de ce dernier.

3. Bicyclette pliante suivant la revendication 1, caractérisée en ce qu'elle comporte un element de support (25) porté par l'ensemble de roue arrière, ladite première charnière (20) étant positionée d'une manière telle que ledit élément de support (25) sert en position repliée de surface de support pour la bicyclette repliée et lorsque la bicyclette est dépliée, ledit element de support s'étend sensiblement en position horizontale.

Fig.1

# Fig.2

Fig.3

Fig.4a

Fig.4b

Fig.4c